# EUROPEAN PATENT APPLICATION

(11) **EP 2 239 293 A1**
(43) Date of publication of application: **13.10.2010**
(21) Application number: 09005085.7
(22) Date of filing: 07.04.2009
(51) Int. Cl.: C08G 69/26, C08G 59/44

(54) **Hardeners for epoxy coatings**

(71) Applicant: Research Institute of Petroleum Industry (RIPI), 18799 Tehran (IR)
(72) Inventor: Bagherzadeh, Mohammed Reza, Teheran (IR)
(74) Representative: Fuchs

(57) **Abstract**

The present invention deals with hardeners for epoxy resins, comprising the reaction products of
a. at least one saturated dicarboxylic acid of formula HOOC(CH₂)ₓCOOH or its derivatives, wherein x is an integer of from 2 to 12, and
b. a saturated aliphatic or cycloaliphatic polyamine of formula H₂N(R-NH)_{y}H, wherein R is either
i. aliphatic, and R is C₁ to C₆, and y is an integer of from 1 to 6, or
ii. cycloaliphatic, and R is 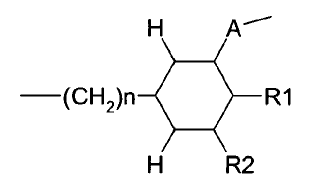 or 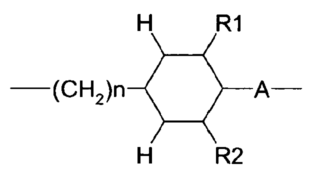 and y is 1, and R1 and R2 are independently hydrogen or methyl, and A is a saturated aliphatic or cycloaliphatic hydrocarbon with less than 8 carbon atoms, and n is an integer of from 0 to 3,

c. one or more epoxy compounds.

## Description

### Background of the invention

### Field of the invention

The present invention relates to hardeners for epoxy resins which can be employed in the production of aqueous epoxy resin emulsions or dispersions for formulation of water based paints and coatings.

### Description of the prior art

Water-based as well as solvent-based organic coatings are generally composed of the following ingredients:
- Resins or binders are the most important ingredients of paints and coatings;
- Pigments are used to introduce colors into the paint or coating and may also be used to achieve other desired characteristics like anti-corrosion properties;
- Fillers decrease the amount of required pigments and may also be used to improve the physical properties of the resulting films;
- Solvents are used to reduce viscosity, to homogenize the mixture and to modify the layer properties of the resulting film; and
- Additives are used in relatively low amounts (about 2.5 to 3% by wt.) and supply coalescing, antifoaming, antiseptic, anti-settling and anti-freezing properties to coatings and paints. Additives may as well be applied to adjust pH and as wetting agents.

The difference between coatings and paints, in general, is the presence of pigments in paints, while coatings usually do not comprise pigments for coloration as coatings mainly exert protective effects to the coated substrate. In the following the expression "coating" shall cover both paints and coatings.

Some coatings comprise resins or binders that need to be hardened after application of the respective formulation to the coated layer. A very important ingredient for such coatings is the so-called hardener or curing agent which has the role of creating a network structure through forming inter-chain connections between the resin molecules. Epoxy resins are binders that need hardeners in order to build the required film layer.

Commercially available epoxy resins and epoxy coatings can be classified into the groups of one-component and two-component coatings. In case of one-component coatings the hardener is already mixed with the other components of the coating, while in two-component systems the hardener is supplied separately from the other components.

One-component systems are used for coating of small surfaces and curing is performed under high temperatures in a furnace. Two-component systems are mainly used for coatings of larger surfaces like for example oil tanks, pipelines and other oil and gas facilities where application of higher temperatures is difficult.

Two-component epoxy systems usually comprise hardeners comprising amine or amide residues which crosslink with epoxy resin molecules. The two components hardener and epoxy resin molecules are mixed together such that the number of active hydrogen atoms on the hardener molecule matches the number of epoxy groups on the respective epoxy resin molecule. Many studies have been conducted on two-component water-based epoxy resin systems.

US 2002 0072576 A1 refers to hardeners for epoxy resins comprising:
I. the reaction product of a di- and/or polyepoxides compound with a polyalkylene polyether mono, di- or polyamine, having a molecular weight of from 148 to 5000, wherein the reaction product has no free amino groups;
II. an amino-terminal adduct of an epoxy resin and a primary and/or secondary mono- and/or di- and/or polyamine, wherein the secondary amine has at least two secondary amino groups and the adduct is substantially free of non-converted amino groups;
III. an amino-terminal adduct of an epoxy group-containing reactive thinning agent and a primary and/or secondary mono- and/or di- and/or polyamine, wherein the secondary amine has at least two secondary amino groups and the adduct is substantially free of non-converted amino groups.

The above-mentioned prior art hardener composition is only obtainable by costly synthesis and also includes application of non-ionic dispersing agents, which in turn leads to absorption of water by the coating, thereby gravely decreasing its corrosion resistance.

According to the disclosure of US 6 077 884 A, conventional epoxy resins are mixed with dispersing agents to yield emulsions or water dispersed epoxy resins. The resulting epoxy resins, however, are very unstable and tend to precipitate. The particle sizes of the resins are in the range of >1µm and tend to coagulate after one or two weeks. As a result of the increased size of the particles, the properties of the resulting coating are negatively affected by formation of non-homogeneous coatings that are highly permeable by moisture and corrosive agents.

In some cases, thinning agents such as reactive diluents are used to decrease viscosity and consequently increase dispersion stability. These diluting agents are, however, dangerous due to their high vapor pressures and toxicities. The resulting epoxy coatings are also affected by the negative properties of these diluting agents.

The emulsifier used in US 6 077 884 A is a mixture of epoxy-amine adducts formed by the reaction of one or several aromatic and cycloaliphatic epoxy compounds or epoxy-novolac with polyalkylene glycols comprising terminal amine branches.

As a result of the application of water dispersible emulsifiers, and water-miscible hardeners the epoxy resins are dispersed in water. This disclosure also mentiones epoxy-amine adducts as dispersing agents which decrease water resistance of the coatings together with increasing the particle sizes of the resins which lead to the previously-mentioned defects in coating properties.

EP 0 109 173 A1 discloses a two-component epoxy coating, wherein the first component is the diglycidyl ether of bisphenol A or derivatives thereof. To disperse this component in water the diglycidyl ether is partially reacted with a polyoxyalkylene amine. The second component is a hardener or cross-linking agent, which is claimed to be an active polyamido polyamine. This system requires incorporation of non-ionic emulsifiers which will remain in the system. This not only decreases corrosion resistance of the coating, but it also increases moisture absorbance and moisture sensitivity of the resulting coating.

WO 93/21250 A1 discloses a aqueous emulsion of active amine groups (as epoxy adducts) to be used as an epoxy resin hardener. The water-based hardener solution used therein has an amine hydrogen equivalent of 50 to 250 (e.g. Epilink 660 which is composed of amine epoxy resin adducts), and it comprises active amine groups and has the ability to emulsify the epoxy resin. The hardener forms a new hardener after reacting with an epoxy resin of a molecular weight of about 700 (e.g. Epikote 1001 which is composed of diglycidyl ether of bisphenol A epoxy resin type with EEW = 450 to 500 g/mol). The new hardener, being an epoxy amine adduct, can be dispersed in water and also has a higher amine H equivalent with respect to the initial one. It has been stressed in this application that the water-based hardener is suited for curing water-based epoxy resins. The process for preparing water-based epoxy resin and water-based hardener is rather complicated, and the resulting coating is highly moisture sensitive, and they suffer instability and low qualities as a result.

In general, all of the previous systems suffer disadvantages including:
- lack of suitable stability and corrosion resistance;
- necessity of using dispersing agents and also neutralization processes which are used to prepare the water dispersed resin;
- necessity of converting normal epoxy resins to water dispersible epoxy resins by chemically bonding them to non-ionic dispersants, leading to the reduction of water resistance of the coating;
- necessity of using active diluting solvents in epoxy resin (to reduce viscosity and increase stability), leading to negative effects on the physical coating properties;
- application of hardeners with free amine groups in some cases, diversely affecting the corrosion resistance of the coating;
- application of small amine molecules as hardener, making the coatings easily breakable and decreasing pot-life; and
- application of both water dispersible resins and water dispersible hardeners, increasing the moisture sensitivity of the coatings due to presence of hydrophilic groups within.

### Object

It is the object of the present invention to provide improved hardeners for epoxy resins.

It is furthermore an object of the present invention to eliminate the need to use surfactants or emulsifiers in the preparation of water dispersible epoxy resins and resulting coatings by synthesizing a hardener that can induce the desired properties into the coatings.

It is another object of the present invention to eliminate the need to synthesize water dispersible epoxy resins or application of water-based additives, which introduce the above-discussed drawbacks to the resulting coatings.

It is a further object of the present invention to provide a hardener that can be used together with all of the presently-used commercial epoxy resins.

It is another object of the present invention to formulate water-based zinc rich epoxy primer coating using conventional epoxy resins and this invention synthesized hardener without Zn to ZnO converting.

It is also another object of the present invention to increase the pot-life of the coating system by using the hardener of the present invention.

### Summary of the invention

The hardeners according to the present invention comprise the reaction products of
a. at least one saturated dicarboxylic acid of formula HOOC(CH₂)ₓCOOH or its derivatives, wherein x is an integer of from 2-12, and
b. a saturated aliphatic or cycloaliphatic polyamine of formula H₂N(R-NH)_{y}H, wherein R is either
   i. aliphatic, and R.is C₁ to C₆, and y is an integer of from 1 to 6, or
   ii. cycloaliphatic, and R is 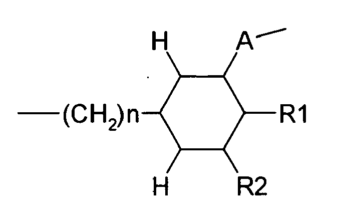 or 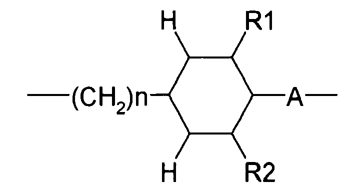 and y is 1, and R1 and R2 are independently hydrogen or methyl, and A is a saturated aliphatic or cycloaliphatic hydrocarbon with less than 8 carbon atoms, and n is an integer of from 0 to 3.
c. one or more epoxy compounds.

The saturated dicarboxylic acid is preferably unbranched. The derivatives of the saturated dicarboxylic acid are preferably selected from esters, anhydrides and halides.

It is preferred according to the present invention that x is an integer of from 4 to 11, preferably 6 to 10. Y is preferably an integer of from 2 to 5. In preferred embodiments of the present invention R1 is hydrogen and R2 is CH3 and A is a saturated aliphatic hydrocarbon with less than 3 carbon atoms and n is an integer of from 0 to 2. According to preferred embodiments of the present invention R is C₁ to C₄, preferably C₁ to C₃, and y is an integer of from 2 to 4. According to another embodiment of the present invention R1 and R2 are hydrogen and A is 0 and n is 0 or 1.

The polyamine is preferably aliphatic. The epoxy compounds preferably comprise at least 1.5 epoxy groups per molecule. Preferably, the epoxy compounds are selected from the group consisting of diglycidyl-1,2-cyclohexane dicarboxylate, bisphenol-A propoxylate diglycidyl ether, glycerol propoxylate triglycidyl ether, trimethylolpropane triglycidyl ether, 3,4-epoxycyclohexylmethyl-3,4-epoxycyclohexanecarboxylate, poly(propylene glycol) diglycidyl ether, neopentyl glycol diglycidyl ether, 1,4-cyclohexanedimethanol diglycidyl ether, poly(dimethyl siloxane) diglycidyl ether, 3-bis[3-(2,3-epoxypropoxy) propyl]tetraethyl disoloxane and mixtures thereof. More preferably the epoxy compounds are selected from the group consisting of glycerol alkoxylate triglycidyl ethers, trimethylolpropane triglycidyl ether, poly (dimethyl siloxane) diglycidyl ether, 3-bis[3-(2,3-epoxypropoxy) propyl]tetraethyl disoloxane and polyalkylene glycol diglycidyl ethers with alkyl groups in the range of C₁ to C₄, and preferably of C₂ to C₃.

The hardeners that are obtained according to the above mentioned reaction may comprise residual non-tertiary (primary and/or secondary) amine groups which are preferably covered using active substances that include at least one epoxy group in their structure and are hereinafter referred to as glycidyl compounds. Glycidyl compounds that are preferred according to the present invention are selected from the group consisting of glycidyl ethers of butyl, hexyl or cresyl as well as glycidyl esters. The resulting compound (the hardener of this invention) not only acts as a hardener but it also serves as a dispersing agent which changes the epoxy resin to a water dispersible epoxy resin. As a result addition of further dispersing agents during preparation of two component epoxy resin systems is not necessary. Instead, diglycidyl ethers of bisphenol A and bisphenol F epoxy resins with epoxy equivalent weights (EEW) of 180 to 1500 g/mol and more preferably 180 to 1000 g/mol and most preferably 180 to 600 g/mol can be used. As mentioned, glycidyl compounds are used to react with primary and/or secondary amine groups in the hardener, reducing the hardener-epoxy resin reaction rates and hence increasing the pot life of the formulation. This leads to further benefits, including reducing the water sensitivity of resulting films and increasing the anti-corrosion properties of the coatings. Also, the mechanical properties of the film are improved.

Preferred polyamine compounds according to the present invention are selected from the group consisting of diethylene triamine, triethylene tetramine and tetraethylene pentamine. Preferred cycloaliphatic polyamines are selected from the group of above-described polyamines, wherein R1 and R2 are hydrogen and A is a linear saturated aliphatic hydrocarbon with less than 2 carbon atoms and n is less than 2.

According to an alternative embodiment of the present invention a mixture of the above-mentioned aliphatic and/or cycloaliphatic polyamine compounds are present in the hardener. The polyamine compound is reacted with at least one saturated multifunctional acid as described above.

Preferably, the acid is chosen from the group consisting of succinic, glutaric, adipic, pimelic, suberic, azelaic, sebacic, undecanedioic and dodecanedioic and their derivatives as well as mixtures thereof. The most preferred acids to be used according to the present invention are suberic, azelaic, sebacic acids and anhydrides thereof.

The present invention also refers to a process for the production of the hardener according to the present invention.

In order to obtain the hardeners according to the present invention the polyamines and acids are mixed in a ratio of 2:1 and a reactor is heated up to 100 to 150°C, preferably 120 ± 5°C, and kept at that temperature for 2 to 10 minutes until a homogenous mixture is achieved. The dicarboxylic acids and the polyamines react with each other to form amides. The reaction is conducted such that the pH does not decrease to below 9.

The reaction mixture is then heated to 165 to 190°C, preferably 170 to 185°C, to yield the respective reaction product. The reaction product of this reaction step is a polyamidoamine in which the terminal acid groups of the difunctional acid have reacted with the primary amine groups of the polyamine. The water produced during the reaction is preferably separated using a water trap and can be used as an indicator of the extent of the reaction. The trapping and separation of the produced water can also increase the reaction yield.

The produced polyamidoamine is then reacted with at least one epoxy compound. The epoxy compound is preferably chosen from the group consisting of diglycidyl-1,2-cyclohexane dicarboxylate, bisphenol-A propoxylate diglycidyl ether, glycerol propoxylate triglycidyl ether, trimethylolpropane triglycidyl ether, 3,4-epoxycyclohexylmethyl-3,4-epoxycyclohexanecarboxylate, poly(propylene glycol) diglycidyl ether, neopentyl glycol diglycidyl ether, 1,4-cyclohexanedimethanol diglycidyl ether, poly(dimethyl siloxane) diglycidyl ether, 3-bis[3-(2,3-epoxypropoxy) propyl]tetraethyl disoloxane and mixtures thereof.

The above-mentioned epoxy compound is added to the reaction mixture, preferably within a period of 15 min at 50 ± 5°C while stirring. The reactants are thoroughly mixed for 15 ± 5 min.

The product of the above step can be used directly or preferably after reacting with one or a mixture of a further glycidyl compound selected from the group consisting glycidyl ethers of butyl, hexyl or cresyl as well as respective glycidyl esters or mixtures thereof.

These glycidyl compounds are used to react preferably with the primary and/or secondary free amine groups of the product of the above mentioned reaction steps, however, the product of the reaction can also be used to fulfill the purposes of the present invention without further being reacted with such compounds. It is noteworthy that the reaction of the hardener of the present invention with the mentioned compounds is for further improvement of the physical and chemical properties of the resulting epoxy coatings taking advantage of the hardener of the present invention.

The ratio of the active amine hydrogens of the hardener to the number of epoxy groups of the glycidyl compound preferably is 2: 0.1, more preferably below 2:0.1 and most preferably below 2:0.08. By adjusting this ratio in the above manner reaction of the final hardener with epoxy resins is optimized, thereby improving drying time for the resulting film.

The glycidyl compound is preferably added at a temperature of 50 ± 5 °C and preferably within in a period of 10 minutes, while stirring at preferably 400 to 800 rpm/min. The compound reacts with the primary and/or secondary amine groups, thus increasing length of the hardener hydrocarbon chain and, hence, molecular weight. This improvement leads to better physico-mechanical and chemical film properties.

In order to yield proper viscosity and solid content of the resulting hardener composition the reaction mixture is preferably diluted with at least one polar solvent selected from the group consisting of water, glycol ethers such as ethylene glycol monopropyl ether, ethylene glycol monobutyl ether, propylene glycol monoethyl ether, diethylene glycol monobutyl ether, butyl glycol dipropylene glycol n-butyl ether, propylene phenyl ether and tripropylene glycol n-butyl ether; and alcohols such as isopropyl alcohol and butanol as well as mixtures thereof. The polar solvent is preferably selected from the group consisting of water, butyl glycol and isopropanol as well as mixtures thereof. The polar solvent is preferably added after the reaction is completed.

The synthesis of the hardener of the present invention is preferably performed according the chemical illustrations below, i.e. in a four-necked flask equipped with a condenser, thermometer, mixer and water trap. The reaction progress can be monitored by using IR, pH and or by amount of produced trapped water. The viscosity and solid content of the final product are adjusted using proper polar solvents as mentioned above.

The resulting mixture is then mixed with the top, intermediate and primer epoxy paint formulations to yield the desire film formulation, and then rested for a period to let the reaction between the resin and hardener begin. The viscosity of each formulation is then adjusted to the desired values, which depend on the other ingredients of the formulation, using water. The viscosity is adjusted to meet the requirements of the application method, which in the case of industrial coatings is commonly the air spraying method.

### Examples

The below examples are to clarify the method of synthesis and application of the hardener of the present invention, and are by no way meant to restrict the subject-matter of the invention.

### Example 1

In order to synthesize water based hardener of this invention a 1000 ml four- necked reactor equipped with condenser, thermometer, mixer and water trap was used. First 212.6 g triethylene tetramine were charged into the reaction vessel and the temperature was increased to 80 ± 5°C, then 170.4 g azelaic acid was added and the temperature is increased to 120°C. The mixture was thoroughly agitated and heated for 5 minutes. Then the temperature was increased to 180 ± 5°C in order to start the reaction. The water which is produced during of the reaction condensed in the water trap.

The resulting reaction product was cooled to 50 ± 5°C and 158.5 g glycerol propoxylate triglycidyl ether was added during a period of 15 minutes while stirring. The reactants were thoroughly mixed for 15 ± 5 minutes. Eventually 20.5 g glycidyl ester was added at 50 ± 5°C and thoroughly agitated (about 600 rpm). At the end of the reaction viscosity was adjusted by addition of water and/or butyl glycol and/or isopropanol. Thereby the solid content of this hardener (H1) was adjusted to 54 ± 3 % by weight.

### Example 2:

In a 1000 ml four necked reactor equipped with condenser, thermometer, mixer and water trap 88.93 g 4-amino cyclohexane methane amine and 204.68 g of triethylene tetramine were mixed and heated to a temperature of 80 ± 5°C. Then 235 g of azelaic acid were added and the temperature was increased to approximately 120°C. The mixture was thoroughly agitated and heated for 5 min. Then the temperature was increased to 185 ± 5°C in order to start the reaction. Resulting water condensed in the water trap.

The product was cooled to 50 ± 5°C and 320 g of poly(propylene glycol)diglycidyl ether were added during a period of 15 minutes while stirring. Then the reactants were thoroughly mixed for 15 ± 5 minutes. Eventually 23.4 g of glycidyl ester were added at a temperature of 50 ± 5°C and thoroughly agitated (about 600 rpm). At the end of the reaction viscosity was adjusted by addition of water and/or butyl glycol and/or isopropanol in a proper amount. Solid content of this hardener (H2) was adjusted to 54 ± 3 % by weight.

### Example 3:

In a 1000 ml four necked reactor equipped with condenser, thermometer, mixer and water trap 190.1 g of triethylene tetramine were charged into the reactor and temperature was increased to 80 ± 5°C. Then 146.1 g of sebacic acid were added and temperature was increased to approximately 125°C. The mixture was thoroughly agitated and heated for 5 min, then temperature was increased to 185 ± 5°C. When the reaction started the water which is produced during of the reaction started to condense in the water trap.

The product was cooled to 50 ± 5°C and 208 g of poly(propylene glycol)diglycidyl ether were added during a period of 15 minutes while stirring. The reactants were mixed thoroughly for 15 ± 5 minutes. Eventually 18.7 g of glycidyl ester were added at 50 ± 5°C and thoroughly agitated (about 600 rpm).

At the end of the reaction viscosity was adjusted by addition of water and/or butyl glycol and/or isopropanol in a proper amount. Solid content of this hardener (H3) was adjusted to 54 ± 3 % by weight.

### Example 4:

In a 1000 ml four necked reactor equipped with condenser, thermometer, mixer and water trap 219.3 g of triethylene tetramine were heated to a temperature of 80 ± 5°C. Then 176.25 g of azelaic acid were added and temperature was increased to approximately 120°C. The mixture was thoroughly agitated and heated for 5 minutes. Then temperature was increased to 180 ± 5°C. When the reaction started the water which is produced during of the reaction condensed in the water trap.

The product was cooled to 50 ± 5°C and 25 g of bisphenol-A propoxylate glycol diglycidyl ether and 69.2 g of neopentyl glycol diglycidyl ether were added during a period of 15 minutes while stirring. Reactants were mixed thoroughly for 15 ± 5 minutes.

At the end of the reaction viscosity was adjusted by addition of water and/or butyl glycol and/or isopropanol in a proper amount. Solid content of this hardener (H4) was adjusted to 54 ± 3 % by weight.

### Example 5

In a 1000 ml four-necked reactor equipped with condenser, thermometer, mixer and water trap 315.8 g of triethylene tetramine were heated to a temperature of 80 ± 5°C. Then 253.8 g of azelaic acid were added and temperature was increased to approximately 120°C. The mixture was thoroughly agitated and heated for 5 min. Then temperature was increased to 180 ± 5°C start the reaction. Water condensed in the water trap.

The product was cooled to 50 ± 5°C and 55.37 g of cyclohexane dimethanol diglycidyl ether, 61.4 g of diglycidyl-1,2-cyclohexane dicarboxylate and 105.84 g of polydimethyl siloxane diglycidyl ether were added during a period of 15 minutes while stirring. Reactants were mixed thoroughly for 15 ± 5 min. Eventually 18.7 g of glycidyl ester were added at 50 ± 5°C and thoroughly agitated (about 600 rpm).

At the end of the reaction viscosity was adjusted by addition of water and/or butyl glycol and/or isopropanol in a proper amount. Solid content of this hardener (H5) was adjusted to 54 ± 3 % by weight.

### Example 6

In a 1000 ml four-necked reactor equipped with condenser, thermometer, mixer and water trap 209.6 g of triethylene tetra amine were heated to a temperature of 80 ± 5°C. Then 169.2 g of azelaic acid were added and temperature was increased to approximately 120°C. The mixture was thoroughly agitated and heated for 5 min. Then temperature was increased to 180 ± 5°C in order to start the reaction. Water condensed in the water trap.

The product was cooled to 50 ± 5°C and 352.8 g of polydimethyl siloxane diglycidyl ether were added during a period of 15 minutes while stirring. Reactants were mixed thoroughly for 15 ± 5 minutes. Eventually 29.15 g of cresyl glycidyl ether were added at 50 ± 5°C and thoroughly agitated (about 600 rpm).

At the end of the reaction viscosity was adjusted by addition of butyl glycol in a proper amount. Solid content of this hardener (H6) was adjusted to 54 ± 3 % by weight.

### Example 7

17 g of H1, 13.5 g of H2, 13 g of H3, 9 g of H4, 10.2 g of H5 and 14.5 g of H6 were each mixed with one of six 100 g coating samples having identical formulations as shown in table 1. The paint and hardener mixtures were then mixed very well for 5 to 10 minutes. In order to have proper viscosity values for applying the coating on sandblasted panels by an air spray, the final mixture was diluted with water. Thickness of the resulting dry primer coating was 75 ± 5 µm. The paint comprised a zinc rich epoxy primer.

**Table 1. Composition of the zinc rich epoxy primer (paint) samples**

| ***Wt.%*** | ***Materials*** |
|---|---|
| 12 | Epoxy resin |
| 1.2 | Benton gel |
| 0.2 | Dispersing agent |
| 4.45 | Mika powder |
| 80 | Zinc powder |
| 1.75 | Coalescing agent |
| 0.15 | Mar resistance |
| 0.25 | Leveling agent |

The results of the physical tests performed on each sample are shown in table 2. These results show that all of the hardener compounds mentioned in the description have comparable physical properties.

**Table 2: Physico-mechanical tests on water-based zinc rich epoxy primers prepared using the H1-H6 hardeners**

| **Properties** | **Standard test method** | **H 1** | **H 2** | **H 3** | **H 4** | **H 5** | **H 6** |
|---|---|---|---|---|---|---|---|
| Thickness (µm) | ASTM D1186 | 70-80 | 70-80 | 70-80 | 70-80 | 70-80 | 70-80 |
| Settling | ASTM D869 | 8 | 8 | 8 | 8 | 8 | 8 |
| Grinding (µm) | ASTM D1210 | 25 ± 1 | 25 ± 1 | 25 ± 1 | 25 ± 1 | 25 ± 1 | 25 ± 1 |
| Set to touch time (min) | ASTM D5895 | 15 | 17 | 15 | 13 | 16 | 23 |
| Fully cured (days) | ASTM D1640 | 7 | 7 | 7 | 7 | 7 | 7 |
| Hardness (S) | ASTM D4366 | 182 | 170 | 180 | 190 | 197 | 165 |
| Adhesion | ASTM D3359 | 5B | 4B-5B | >4B | >4B | 4B | 5B |
| Impact (lb/in²) | ASTM D2794 | 35 | 45 | 38 | 30 | 26 | 49 |
| Solid content (%) | ASTM D2369 | 89 ± 1 | 89 ± 1 | 89 ± 1 | 89 ± 1 | 89 ± 1 | 89 ± 1 |
| Water miscibility * (paint + hardener) | - | 4 -5 | 4 | 4 | 3-4 | 4-5 | 5 |

| | | | | | | | |
|---|---|---|---|---|---|---|---|
| * Scale: 5 = excellent, 0 = poor | | | | | | | |

Results of a test of the anti-corrosion properties of each of the prepared samples based on the H1-H6 hardeners are summarized in table 3. These results also indicate that the excellent anti-corrosion properties of the samples are comparable with each other, which is a good indication of the applicability of the hardeners of the present invention.

**Table 3: Anticorrosion properties of water Based zinc rich epoxy primers**

| **Properties** | **Standard method** | **H1** | **H2** | **H3** | **H4** | **H5** | **H6** |
|---|---|---|---|---|---|---|---|
| Salt spray | ASTM B117 | 1000 h without any blister or rust | 1000 h without any blister or rust | 1000 h without any blister or rust | 1100 h without any blister or rust | 900 h without any blister or rust | 850 h without any blister or rust |
| Humidity | ASTM D2247 | 1000 h without any blister or rust | 1000 h without any blister or rust | 1000 h without any blister or rust | 1100 h without any blister or rust | 900 h without any blister or rust | 850 h without any blister or rust |
| Double rub Acetone MEK | ASTM D4752 | > 100 | > 100 | > 100 | > 110 | > 110 | > 120 |
| | | > 100 | > 100 | > 100 | > 110 | > 110 | > 120 |

### Example 8

In order to prepare water-based epoxy MIO intermediate diglycidyl ether of bisphenol-A resin with an EEW of 180 to 1500 g/mol, preferably 180 to 1000 g/mol and most preferably of 180 to 600 g/mol were used as the binder. Micaceous iron oxide (MIO) powder was used as the main pigment (having anti-corrosion effect through barrier property), which also enhances the adhesion of the topcoat to the primer layer. Barite and mica powders were used as fillers and a coalescing agent was used to improve film formation and result in better physical and mechanical film properties. Anti-settling and dispersing agents were used to avoid settlement of the powders and enhance homogenous dispersion of the powders in the intermediate coating.

The hardener (H1) was prepared as described above and mixed with the intermediate coating composition in a ratio of 10:1.25. The resulting mixture was thoroughly mixed for 5 to 10 minutes and viscosity was adjusted using desired amounts of water. The dry film thickness (DFT) of the MIO intermediate layer was found to be 150 ± 10µm which was obtained for two successive applications of the MIO layer on the metal primed surface.

The formulations and the coating properties according to the invention were compared with such known in the prior art, as shown in Table 4.

**Table 4: Water-based epoxy MIO intermediate formulation and coating properties**

| Formulation | **Example 1 (this invention)** | US 2004 0116599 |
|---|---|---|
| Water-based epoxy resin | - | 450 |
| Epoxy resin | 25.2 | - |
| Benton gel | 1.3 | - |
| Mar resistance | 0.6 | - |
| Dispersing agent | 0.45 | 1 |
| Defoamer | - | 0.2 |
| Mica Iron Oxide | 49.7 | 190 |
| Mica | 19.3 | 60 |
| Talc | - | 80 |
| BaSO₄ | - | 100 |
| Zn₃(PO₄)₂ | - | 15 |
| ZnMnO₄ | - | 5 |
| Coalescing agent | 3.25 | - |
| Leveling agent | 0.2 | - |
| Wetting Agent | - | 1.5 |
| Antiseptics | - | 2.8 |
| Antifingal | - | 2.2 |
| Thickener TT 935 | - | 9 |
| 2-amino-1-propanol | - | 2.5 |
| Hardener | 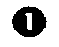 | 18 |
| Water | 75 | 70 |

| Coating Properties | | |
|---|---|---|
| Set-to-touch, min | 20 | - |
| Dry Film Thickness, µm | 150 ± 5 | 45 |
| Fully Cured, days | 14 | - |
| Direct Impact, in-lbs | 50 | 34.7 |
| Pendulum | 85 | - |
| alt spray, h | > 500 | 500 |
| Humidity, h | - | - |
| Adhesion | 5B | - |
| ouble Rubs (MEK) | > 100 | - |

| | | |
|---|---|---|
| 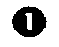 H1 mixed (1.25:10) with paint * Drier VXW is a product from Vianova Co., Austria | | |

### Example 9

In order to prepare water-based epoxy topcoat diglycidyl ether of the two above formulation was used. TiO₂ was used as the pigment to introduce the desired color and barite and mica powders were used as extenders in order to increase mechanical properties of the coatings.

The same coagulating, anti-settlement and dispersant reagents as in the case of the previous example were used. The same hardener was also used. The ratio of the hardener to the other ingredients was between 3.3:10and the mixture was mixed for 2 to 10 minutes and viscosity was adjusted by addition of water. Dry film thickness of the topcoat layer was 70 ± 5 µm. The topcoat water-based epoxy formulation and coating properties of the resulting formulation are summarized in Table 5 and compared with some prior art documents.

**Table 5: Comparison of topcoat water-based epoxy formulations and coating properties thereof**

| Formulation | **H 1** | **EP** **0109173** | **US** **6,077,884** | **US** **4,421,906** | **US** **4,608,406** |
|---|---|---|---|---|---|
| A. Based Resin Mixture, pbw | | | | | |
| Water-Based Epoxy Resin | - | 78 | 94.11 | 102 | 411.6 |
| Epoxy Resin | 35.66 | - | - | - | - |
| Benton Gel | 1.1 | - | - | - | - |
| Mar and slip agent | 0.54 | - | - | - | 27.8 |
| Dispersing Agent | 0.35 | - | 4.34 | - | - |
| Wetting Agent | 0.25 | - | - | - | - |
| TiO₂ | 25.25 | 30 | 28.96 | 35 | - |
| Barite | 18.15 | - | 137.55 | - | - |
| Mika Powder | 14 | - | - | - | - |
| Coalescing Agent | 4.1 | - | - | - | - |
| Levelling Agent | 0.6 | - | - | - | - |
| Defoamer | - | 1.3 | 2.9 | 1.5 | - |
| Isopropanol | - | 10 | - | 10 | - |
| Water | - | 80 | 10.14 | 150 | 13.7 |
| B. Curative Mixture, pbw | | | | | |
| Hardener | 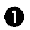 | 50 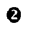 | 97 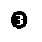 | 50 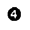 | 202 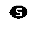 |
| Glycol Ether | - | 20 | - | 20 | - |
| Glycol Ether Acetate | - | 10 | - | 10 | - |
| Diethylene Glycol Monobutyl Ether Acetate | - | - | - | - | 8.2 |
| Defoamer | - | - | - | - | 4 |
| TiO₂ | - | - | - | - | 250 |
| Water | 172.5 | - | - | - | 152.2 |
| Water:Isopropanol (10:1) | | 50 | - | 200 | - |
| C. Properties of Coating | | | | | |
| Set-to-touch, min | 60 | 60 | - | 48 | |
| Direct Impact | 10 lb.in⁻ | 100 in- | - | >160 in-lbs | >10 in-lbs |
| Pencil Hardness after 7 days | - | F | - | 3B | HB |
| Pendulum, S | 46 | - | 80 | - | |
| Salt spray, h | > 500 | - | - | - | 48 |
| Humidity, h | > 500 | - | - | - | 48 |
| Adhesion | 5B | - | - | - | 4B |
| Double Rubs: Xylol | 5 | - | 4-5* | - | - |
| Dry Film Thickness, µm | 70±5 | - | - | - | 50 |

| | | | | | |
|---|---|---|---|---|---|
| 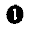 H1 mixed (1.85:10) with paint 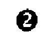 VERSAMID® 140 supplied by Cognis 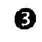 BECOPOX VEH 2177W supplied by Hoechst AG 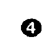 VAESAMID® 140 supplied by Cognis 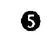 Epi-Cure WC-60-8537, An adduct of polyamine and a polyepoxy having solid content of 60% in 13% glacial acetic acid, 59% water and 38% ethylene glycol monoethyl ether, supplied by Celanese Specialty Resins. * Scale: 5 = excellent, 0 = poor | | | | | |

### Example 10: properties of three layer coatings based on H1

Following the procedures in examples 7 to 9, a three layer epoxy coating system with the characteristics shown in Table 6 was prepared.

**Table 6. Water-based epoxy coating system**

| **Layer** | **Thickness (µm)** |
|---|---|
| Zinc rich primer | 75 |
| MIO intermediate | 2×75 |
| Topcoat | 75 |
| Total thickness | 300 |

The coating system was then tested to evaluate the anti-corrosion properties thereof, based on the common standards in the field as shown in table 7. The resulting data revealed excellent anti-corrosion properties as other advantages of the epoxy coating systems prepared using the hardeners of the present invention.

**Table 7. Anti-corrosion properties of water Based epoxy coating system**

| **Test** | **Standard** | **Result** |
|---|---|---|
| **Salt spray** | ASTM B117 | ≥1500 h without any blister or rust |
| **humidity** | ASTM D2247 | ≥1500 h without any blister or rust |

## Claims

1. Hardeners for epoxy resins, comprising the reaction products of
a. at least one saturated dicarboxylic acid of formula HOOC(CH₂)ₓCOOH or its derivatives, wherein x is an integer of from 2 to 12, and
b. a saturated aliphatic or cycloaliphatic polyamine of formula H₂N(R-NH)_{y}H, wherein R is either
i. aliphatic, and R is C₁ to C₆, and y is an integer of from 1 to 6, or
ii. cycloaliphatic, and R is 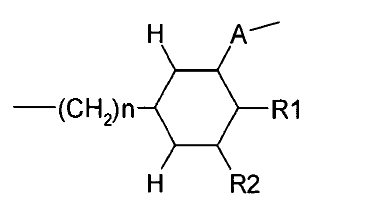 or 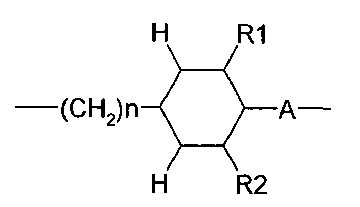 and y is 1, and R1 and R2 are independently hydrogen or methyl, and A is a saturated aliphatic or cycloaliphatic hydrocarbon with less than 8 carbon atoms, and n is an integer of from 0 to 3.
c. one or more epoxy compounds.

2. The hardeners according to one or more of the preceding claims, wherein the saturated dicarboxylic acid is unbranched.

3. The hardeners according to one or more of the preceding claims, wherein the derivatives of the saturated dicarboxylic acids are selected from esters, anhydrides and halides.

4. The hardeners according to one or more of the preceding claims, wherein x is an integer of from 4 to 11.

5. The hardeners according to one or more of the preceding claims, wherein x is an integer of from 6 to 10

6. The hardeners according to one or more of the preceding claims, wherein y is an integer of from 2 to 5.

7. The hardeners according to one or more of the preceding claims, wherein R1 is hydrogen, and A is a saturated aliphatic hydrocarbon with less than 3 carbon atoms, and n is an integer of from 0 to 2.

8. The hardeners according to one or more of the preceding claims, wherein R is C₁ to C₃, and y is an integer of from 2 to 4.

9. The hardeners according to one or more of the preceding claims, wherein R1 and R2 are hydrogen, and A is 0, and n is 0 or 1.

10. The hardeners according to one or more of the preceding claims, wherein the polyamine is aliphatic.

11. The hardeners according to one or more of the preceding claims, wherein the epoxy compounds comprise at least 1.5 epoxy groups per molecule.

12. The hardeners according to one or more of the preceding claims, wherein the epoxy compounds are selected from the group consisting of diglycidyl-1,2-cyclohexane dicarboxylate, bisphenol-A propoxylate diglycidyl ether, glycerol propoxylate triglycidyl ether, trimethylolpropane triglycidyl ether, 3,4-epoxycyclohexylmethyl-3,4-epoxycyclohexanecarboxylate, poly(propylene glycol) diglycidyl ether, neopentyl glycol diglycidyl ether, 1,4-cyclohexanedimethanol diglycidyl ether, poly(dimethyl siloxane) diglycidyl ether, 3-bis[3-(2,3-epoxypropoxy) propyl]tetraethyl disoloxane.

13. The hardeners according to one or more of the preceding claims, wherein the epoxy compounds are selected from the group consisting of glycerol alkoxylate triglycidyl ethers, trimethylolpropane triglycidyl ether, poly (dimethyl siloxane) diglycidyl ether, 3-bis[3-(2,3-epoxypropoxy) propyl]tetraethyl disoloxane and polyalkylene glycol diglycidyl ethers with alkyl groups in the range of C₁ to C₄, and preferably of C₂ to C₃.
